# DEMANDE DE BREVET EUROPEEN

(11) **EP 1 806 955 A1**
(43) Date de publication de la demande: **11.07.2007**
(21) Numéro de dépôt: 06292014.5
(22) Date de dépôt: 21.12.2006
(51) Int. Cl.: H05B 41/288

(54) **Ballast de lampe à décharge gazeuse et procédé de pilotage de ce ballast**

(30) Priorité: 05.01.2006 FR 0600095
(71) Demandeur: VALEO VISION, 93012 Bobigny Cédex (FR)
(72) Inventeur: Nicolai, Jean-Marc, 92400 Courbevoie (FR)

(57) **Abrégé**

Le ballast selon l'invention comprenant un convertisseur continu-continu, un convertisseur continu-alternatif, un générateur de tension d'allumage (6) et une unité de commande (8). Conformément à l'invention, la différence de tension entre des bornes d'entrée (N7, N8) du générateur de tension d'allumage (6) est générée par un circuit élévateur de tension (5) de type « auto-élévateur » à partir d'une tension continue fournie par le convertisseur continu-continu (2) et d'une source de tension auxiliaire V0. Le ballast autorise l'obtension d'un niveau de tension V2 qui est égal au double d'un premier niveau de tension V1 augmenté de ladite tension auxiliaire V0. L'invention permet notamment de supprimer un enroulement secondaire supplémentaire d'un transformateur élévateur compris dans le convertisseur continu-continu en remplaçant celui-ci par un circuit élévateur d'un autre type.

## Description

### DOMAINE TECHNIQUE DE L'INVENTION.

La présente invention concerne un ballast de lampe à décharge gazeuse, en particulier de lampe au xénon, et un procédé de pilotage de ce ballast, notamment pendant l'initialisation de la phase d'allumage de la lampe.

### ARRIERE PLAN TECHNOLOGIQUE DE L'INVENTION.

Dans le but d'améliorer à la fois la puissance lumineuse et le rendement énergétique des sources lumineuses utilisées dans de nombreux domaines, tels que ceux des phares de véhicules ou des vidéo-projecteurs, l'évolution technique actuelle conduit à remplacer les lampes à filament par des lampes à décharge gazeuse à haute intensité. A la différence des ampoules classiques, qui étaient conçues pour être connectées directement à une source basse tension, comme la batterie d'un véhicule, ou moyenne tension, telle que le secteur domestique à 110 ou 220V, ces nouvelles lampes nécessitent des tensions élevées, alternatives ou continues, selon le mode de fonctionnement, pour créer et entretenir la décharge électrique dans le gaz.

Dans le domaine de l'automobile, par exemple, ces tensions élevées, spécifiques à chaque type de lampes (de l'ordre de 25kV pour l'allumage d'une lampe au xénon), sont produites à partir de la tension de bord par un module d'alimentation, qui assure également la régulation de puissance, connu sous le nom de "ballast".

Les ballasts les plus récents comportent le plus souvent un convertisseur continu-continu à découpage produisant une haute tension continue de plusieurs centaines de volts à partir du 12V de la batterie, un convertisseur continu-alternatif assurant l'alimentation de la lampe en régime permanent à partir de la haute tension continue, et un circuit élévateur de tension alimentant un générateur produisant la très haute tension nécessaire à l'allumage de la lampe.

Un ballast de ce type est décrit de manière détaillée dans la demande de brevet français FR2791218.

Le convertisseur continu-continu mis en oeuvre comprend un transformateur élévateur de tension dont l'enroulement primaire est relié en série avec un organe de commutation aux bornes de la source de tension continue. L'interruption répétitive de cette dernière par l'organe de commutation induit aux bornes d'un enroulement secondaire du transformateur une haute tension rectifiée par une diode et filtrée par une capacité.

Le convertisseur continu-alternatif du ballast comprend quatre transistors de commutation montés en pont inverseur, l'ouverture ou la fermeture simultanée d'une paire de transistors opposés étant commandée en alternance avec celle de l'autre paire pour produire une haute tension alternative à partir de la haute tension continue.

Une unité de commande contrôle l'organe et les transistors de commutation.

Le générateur de très haute tension du ballast comprend un transformateur d'allumage dont le bobinage secondaire est connecté en série avec la lampe à décharge aux bornes de sortie du convertisseur continu-alternatif. Le bobinage primaire du transformateur est connecté en série avec un éclateur aux bornes d'un condensateur chargé par le circuit élévateur.

Le circuit élévateur de ce ballast est constitué par un enroulement secondaire supplémentaire du transformateur du convertisseur continu-continu alimentant une cellule de redressement/ filtrage.

La mise en oeuvre d'un transformateur présentant deux enroulements secondaires dans le convertisseur continu-continu d'un ballast est une solution simple et bien connue qui permet de produire efficacement la haute tension nécessaire au générateur de tension d'allumage de la lampe.

Cependant, la conception et la fabrication d'un tel transformateur sont relativement complexes car les tensions et les intensités qui interviennent sont élevées.

Un modèle connu de transformateur de cette sorte comporte un primaire de 4 spires, et deux secondaires de 20 spires et 34 spires en série. Les tensions développées en fonctionnement aux bornes des secondaires sont de -400V et 600V respectivement. Le primaire du transformateur étant connecté à la source basse tension, on conçoit facilement les problèmes d'isolement qui doivent être résolus.

De plus, la présence des deux enroulements et de leurs bornes de connexion conduit nécessairement à un facteur de forme important.

Enfin, le nombre de spires élevé du transformateur engendre une capacité répartie importante qui s'oppose à une fréquence de fonctionnement élevée du convertisseur à découpage, et donc à un rendement optimum.

Compte tenu de ces inconvénients, l'invention a pour but de supprimer l'enroulement secondaire supplémentaire du transformateur élévateur du convertisseur continu-continu en le remplaçant par un circuit élévateur d'un autre type.

### DESCRIPTION GENERALE DE L'INVENTION.

La présente invention concerne donc un ballast de lampe à décharge gazeuse comprenant :
- un convertisseur continu-continu fournissant une tension continue d'un premier niveau prédéterminé V1 à partir d'une source d'alimentation continue,
- un convertisseur continu-alternatif comportant un premier, deuxième, troisième et quatrième éléments de commutation montés en pont inverseur, alimenté par ce convertisseur continu-continu entre un premier noeud commun aux premier et deuxième éléments et un deuxième noeud commun aux troisième et quatrième éléments, et fournissant pendant une phase de fonctionnement permanent de la lampe à décharge une tension alternative entre un troisième noeud commun aux premier et troisième éléments et un quatrième noeud commun aux deuxième et quatrième éléments,
- un générateur de tension d'allumage comportant des bornes de sortie connectées en série avec la lampe à décharge aux troisième et quatrième noeuds du pont inverseur, et des bornes d'entrée soumises pendant l'initialisation de la phase d'allumage de la lampe à décharge à une différence de tension d'un second niveau prédéterminé V2,
- une unité de commande fournissant des premiers signaux de commande au convertisseur continu-continu et des seconds signaux commande au convertisseur continu-alternatif en fonction d'une consigne de pilotage (P) dépendant des phases de fonctionnement de la lampe à décharge.

L'invention a précisément pour objet un ballast de ce type, remarquable en ce que la différence de tension entre les bornes d'entrée du générateur de tension d'allumage de la lampe à décharge est générée par un circuit élévateur de tension de type « auto-élévateur » à partir de la tension continue produite par le convertisseur continu-continu du ballast et d'une source de tension auxiliaire d'une valeur prédéterminée V0.

Selon une caractéristique spécifique au ballast conforme à l'invention, le second niveau prédéterminé V2 de la différence de tension générée par ce circuit auto-élévateur est égal au double du premier niveau prédéterminé V1 de la tension continue produite par le convertisseur continu-continu augmenté de la valeur prédéterminée V0.

Fort avantageusement, le circuit élévateur de tension comporte une diode de maintien et un condensateur d'auto-élévation en série. La borne commune entre cette diode de maintien et ce condensateur d'auto-élévation est reliée électriquement à une première borne d'entrée du générateur d'allumage, l'autre borne du condensateur d'auto-élévation est reliée au quatrième noeud du pont du convertisseur continu-alternatif. La cathode ou l'anode de la diode de maintien est reliée à la source de tension auxiliaire respectivement selon la polarité positive ou négative de la tension continue produite par le convertisseur continu-continu.

De préférence, le générateur d'allumage comprend un condensateur d'allumage entre ses bornes d'entrée, et la seconde borne d'entrée est reliée électriquement au deuxième noeud du pont du convertisseur continu-alternatif.

Ce générateur d'allumage comprend de plus avantageusement un éclateur et un bobinage primaire d'un transformateur d'allumage en série entre ses bornes d'entrée. Un bobinage secondaire du transformateur d'allumage est relié en parallèle aux bornes de sortie du générateur d'allumage.

Le ballast selon l'invention met de préférence en oeuvre des éléments de commutation constitués par des transistors de type IGBT dont les grilles sont reliées à l'unité de commande.

Selon un mode de réalisation particulier du ballast, la tension auxiliaire V0 est nulle, l'anode ou la cathode de la diode de maintien du circuit auto-élévateur étant reliée à la masse.

Dans un autre mode de réalisation de l'invention, le convertisseur continu-continu comprend un transformateur élévateur à enroulement secondaire unique dont l'enroulement primaire est connecté en série avec un organe de commutation sur la source d'alimentation continue. Dans ce cas, la tension auxiliaire est avantageusement égale au potentiel du point commun entre cet enroulement primaire et l'organe de commutation, l'anode ou la cathode de la diode de maintien du circuit auto-élévateur étant reliée à ce point commun.

La présente invention concerne aussi un procédé de pilotage d'un ballast présentant les caractéristiques ci-dessus. Ce procédé est remarquable en ce que :
- pendant l'initialisation de la phase d'allumage de la lampe à décharge, les seconds signaux de commande émanant de l'unité de commande provoquent simultanément l'ouverture des premier et deuxième éléments de commutation et la fermeture desdits troisième et quatrième éléments de commutation de manière à charger au préalable le condensateur d'auto-élévation à une différence de potentiel Vb en ajoutant la tension continue du premier niveau prédéterminé V1 et la tension auxiliaire de la valeur prédéterminée V0, puis les seconds signaux de commande provoquent simultanément l'ouverture des premier et quatrième éléments de commutation et la fermeture des deuxième et troisième éléments de commutation de manière à appliquer aux bornes d'entrée du générateur de tension d'allumage la somme de cette différence de potentiel Vb et de la tension continue du premier niveau prédéterminé V1;
- pendant la phase de fonctionnement permanent de la lampe à décharge, les seconds signaux de commande provoquent alternativement l'ouverture ou la fermeture simultanée des premier et quatrième éléments de commutation et respectivement la fermeture ou l'ouverture simultanée des deuxième et troisième éléments de commutation, de manière à générer entre les troisième et quatrième noeuds la tension alternative destinée à alimenter la lampe.

Dans le mode de réalisation de l'invention où l'on rectifie la surtension de rupture apparaissant au point chaud du primaire du transformateur du convertisseur continu-continu, les premiers signaux de commande provoquent alternativement l'ouverture et la fermeture de l'organe de commutation de manière à générer la tension auxiliaire de la valeur prédéterminée V0.

Ces quelques spécifications essentielles auront rendu évidents pour l'homme de métier les avantages apportés par le ballast selon l'invention par rapport à l'état de la technique antérieur.

De plus, l'invention, du fait de la disponibilité de signaux de commande représentatifs de phases de fonctionnement de la lampe à décharge, présente également l'avantage corrélatif d'autoriser une commande en puissance accrue lors de l'amorçage de la lampe. Par exemple, en forçant les signaux de commande fournis au convertisseur continu-continu à un ou des rapports cycliques prédéterminés pendant la phase d'amorçage. Il devient ainsi possible de réduire la capacité de gros condensateurs utilisés habituellement pour fournir le courant nécessaire au moment de l'amorçage de la lampe.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma synoptique général du ballast de lampe à décharge gazeuse selon l'invention illustrant le principe du chargement du condensateur du circuit auto-élévateur par le convertisseur CC-CC.
La **Figure 2** est un schéma synoptique général du ballast de lampe à décharge gazeuse selon l'invention illustrant le principe de la génération de la différence de tension appliquée au primaire du transformateur d'allumage.
La **Figure 3** est le schéma électrique d'un mode de réalisation préféré du ballast selon l'invention.

### DESCRIPTION DES MODES DE REALISATION PREFERES DE L'INVENTION.

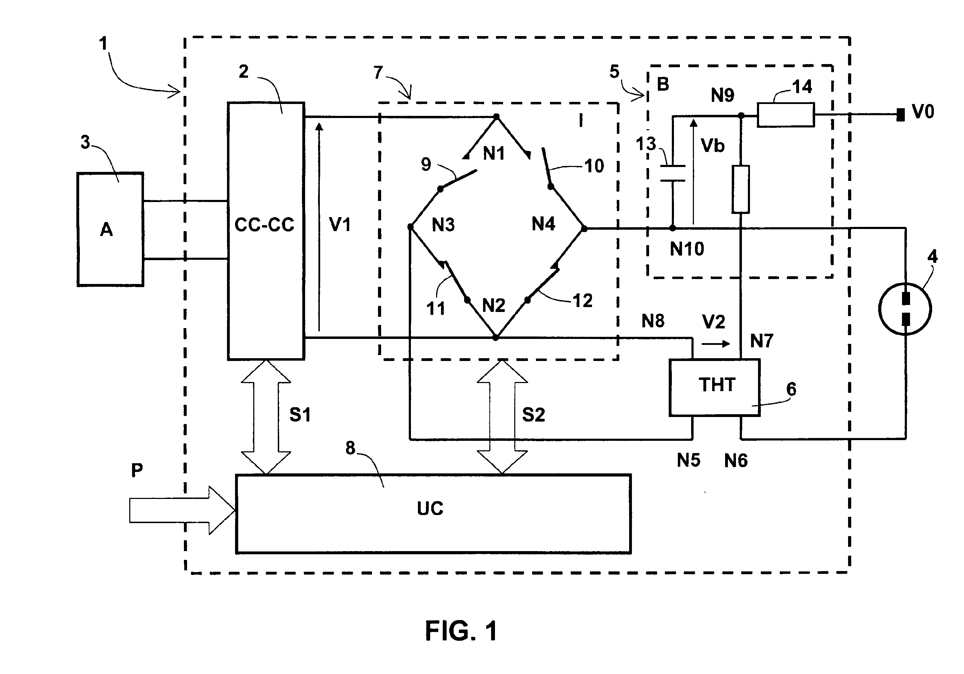

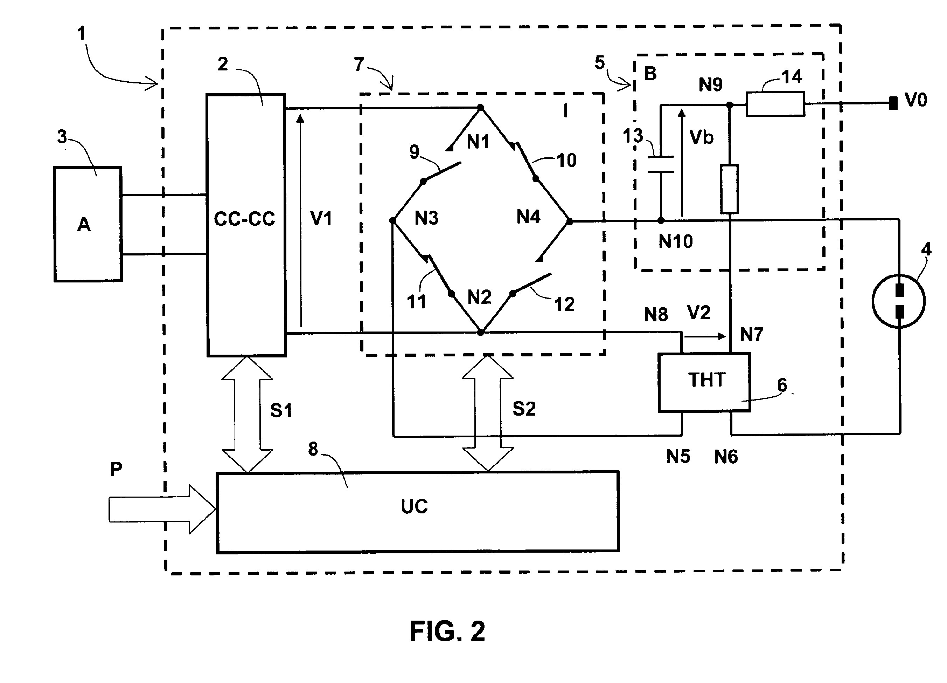

L'architecture fonctionnelle du ballast selon l'invention est représentée sur les **Figures 1 et 2.**

Le ballast 1 comprend essentiellement un convertisseur CC-CC à découpage 2 alimenté par une source d'alimentation continue 3 de 12V et fournissant une haute tension continue V1 de l'ordre de 450V, à partir de laquelle sont produites les différentes tensions nécessaires au démarrage et au fonctionnement en régime permanent de la lampe à décharge 4.

La lampe 4 est une lampe à décharge gazeuse de haute intensité au xénon qui nécessite notamment une tension d'allumage de l'ordre de 25 kV. Cette très haute tension est produite à partir de la haute tension continue V1 par un circuit élévateur de tension 5 alimentant sous une différence de tension V2 de l'ordre de 1000V un générateur de tension d'allumage 6 spécifique lors de l'initialisation de la phase d'allumage.

La haute tension alternative nécessaire au fonctionnement de la lampe 4 en régime permanent est produite de manière connue en soi au moyen d'un convertisseur CC-CA, constitué par un pont inverseur 7, à partir de la haute tension continue V1 fournie par le convertisseur CC-CC 2.

En régime permanent, la largeur des impulsions de découpage du convertisseur CC-CC 2, ainsi que le fonctionnement du pont inverseur 7 sont contrôlés, de manière également connue en soi, en fonction de la puissance consommée par la lampe 4 par une unité de commande 8 à microcontrôleur au moyen de signaux de commande S1,S2 en réponse à des consignes de pilotage P extérieures.

Les éléments de commutation 9,10,11,12 du pont inverseur 7, présents dans tout ballast 1 de ce type pour transformer la haute tension continue V1 du convertisseur CC-CC 2 en tension alternative pendant le régime permanent de la lampe 4, sont avantageusement mis en oeuvre dans le ballast 1 selon l'invention pour charger, lors de l'initialisation de la phase d'allumage, un condensateur 13 à une source de haute tension Vb, puis le décharger dans le circuit d'entrée du générateur de tension d'allumage 6, selon le principe des circuits de type « auto-élévateur », plus connus sous le vocable anglais de « bootstrap ».

Dans le montage classique du pont inverseur 7, deux noeuds opposés N1,N2 sont connectés à la sortie du convertisseur CC-CC 2, et les deux autres noeuds opposés N3,N4 sont connectés en série avec la lampe 4 et les bornes de sortie N5,N6 du générateur de tension d'allumage 6.

Ce générateur de tension d'allumage 6 est un dispositif à seuil de tension: quand la différence de tension V2 entre les bornes d'entrée N7,N8 est supérieure à un seuil prédéterminé, une impulsion de très haute tension est générée entre les bornes de sortie N5,N6.

En régime permanent, deux éléments de commutation opposés 9,12 sont simultanément ouverts ou fermés tandis que les deux autres éléments de commutation opposés 10,11 sont inversement simultanément fermés ou ouverts à la fréquence de travail du convertisseur CC-CA.

La **Figure 1** montre qu'au contraire, lors de la charge du condensateur d'auto-élévation 13 du circuit élévateur 5, deux éléments de commutation adjacents 11,12 du pont inverseur 7 sont fermés tandis que les deux autres éléments de commutation 9,10 sont ouverts.

De ce fait, une borne N9 du condensateur d'auto-élévation 13 étant reliée à une source de tension auxiliaire d'une valeur prédéterminée V0 de l'ordre de 100V par l'intermédiaire d'une diode 14, et l'autre borne étant reliée à une borne de sortie de polarité déterminée du convertisseur CC-CC, le condensateur 13 est chargée à la valeur Vb=V1+VO de l'ordre de 550V.

L'une des bornes d'entrée N7 du générateur de tension d'allumage 6 étant reliée à la borne commune entre le condensateur d'auto-élévation 13 et la diode 14, et l'autre borne N8 étant reliée à la borne de sortie de polarité déterminée du convertisseur CC-CC, l'entrée de ce dispositif à seuil 6 est soumis à la différence de tension Vb=V1 +V0.

Il va de soi que le générateur de tension d'allumage 6 est prévu pour ne pas se déclencher dans ces conditions, mais pour une différence de tension V2 supérieure de l'ordre de 800V.

La **Figure 2** montre la configuration des éléments de commutation 9,10,11,12 du pont inverseur 7 permettant de générer une différence de tension V2 supérieure au seuil prédéterminé entre les bornes d'entrée N7,N8 du générateur de tension d'allumage 6.

Deux éléments de commutation opposés 10,11 du pont inverseur 7 sont fermés (les deux autres étant bien sûr ouverts) et relient le condensateur d'auto-élévation 13 en série avec le convertisseur CC-CC 2 aux bornes d'entrée N7,N8 du générateur de tension d'allumage 6.

La diode 14 en série avec le condensateur 13 est agencée de manière à bloquer la décharge de ce condensateur 13 dans la source de tension auxiliaire V0.

De ce fait, la différence de tension V2 entre les bornes d'entrée N7,N8 est égale à la somme de la tension Vb aux bornes du condensateur 13 et de la tension continue V1 du convertisseur CC-CC 2.

Etant donné que la tension Vb aux bornes N7,N8 du condensateur d'auto-élévation 13 est égale à somme de la tension de sortie V1 du convertisseur CC-CC 2 et de la tension auxiliaire V0, cette différence de tension V2 est par conséquent égale au double de la tension du convertisseur CC-CC 2 augmenté de la tension auxiliaire V0. Elle est donc de l'ordre de 1000V, supérieur au seuil de déclenchement de 600V du générateur de tension d'allumage 6.

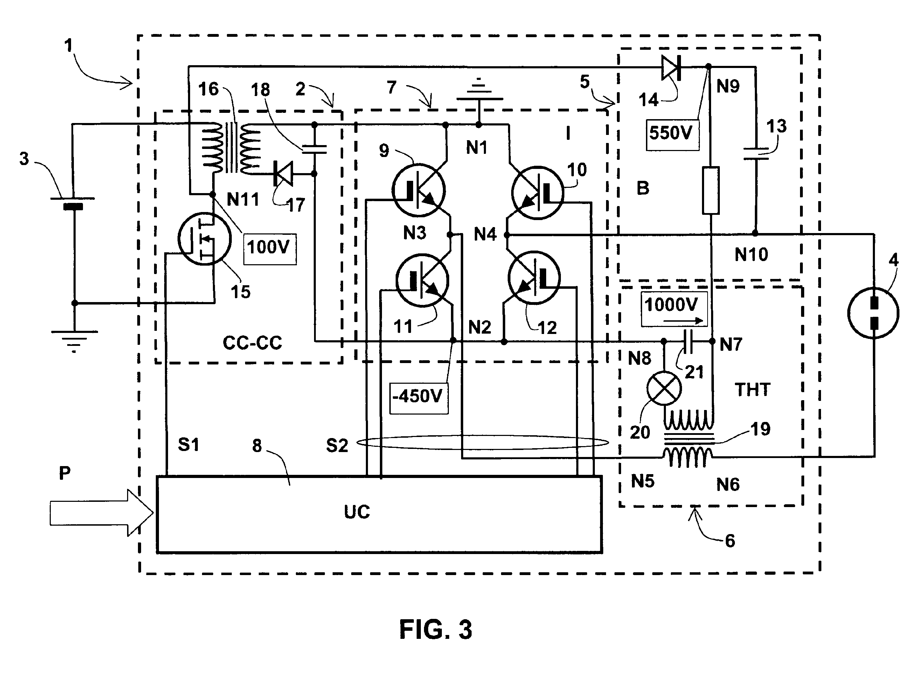

La **Figure 3** montre notamment la façon dont est réalisée la source de tension auxiliaire d'une valeur prédéterminée V0.

De manière connue en soi, le schéma électrique du convertisseur CC-CC 2 met en oeuvre un transistor MOSFET de puissance 15 de type N commutant le courant primaire d'un transformateur élévateur 16 relié en série à une batterie 3 dont le pôle négatif est à la masse

En régime permanent, la grille de ce transistor 15 est commandée par les impulsions de découpage S1 transmises par l'unité de commande 8 de manière à fournir en sortie du convertisseur CC-CC une tension négative de l'ordre de -450V après redressement et filtrage par une cellule diode 17-capacité 18 de la tension apparaissant aux bornes du secondaire du transformateur élévateur 16, dont l'une est reliée à la masse.

Pendant l'initialisation de la phase d'allumage de la lampe 4, les impulsions de découpage S1 sont de plus asservies de façon à fournir sur le drain N11 du transistor de commutation 15 une tension positive de valeur prédéterminée V0 de l'ordre de 100V alimentant la cellule de « bootstrap » 5.

La **Figure 3** montre également le schéma électrique détaillé, connu en soi, du générateur de tension d'allumage 6.

Ce générateur de tension d'allumage 6, comprend un transformateur d'allumage 19 dont le secondaire N5,N6 est inséré en série avec la lampe à décharge 4 aux bornes de sortie N3,N4 du pont inverseur 7.

L'effet de seuil du dispositif 6 est dû à la présence d'un éclateur à gaz 20 connecté en série avec le primaire du transformateur d'allumage 19 aux bornes du condensateur d'allumage 21, ce condensateur 21 étant branché en parallèle sur les bornes d'entrée N7,N8 du générateur d'allumage 6. Quand la différence de tension aux bornes N7,N8 du condensateur d'allumage 21 est supérieure au seuil prédéterminé, l'éclateur 20 devient brusquement conducteur et crée une impulsion de courant dans le primaire du transformateur d'allumage 19, qui produit au secondaire la THT nécessaire au démarrage de la lampe 4.

De préférence, comme le montre aussi la **Figure 3**, le pont inverseur 7 est constitué par quatre transistors NPN 9,10,11,12 de type « IGBT » (acronyme anglais de « Insulated Gate Bipolar Transistor », traduit en français par « Transistor bipolaire à grille isolée »), bien adaptés aux intensités commutées et aux hautes tensions mises en jeu, tant pendant la phase d'allumage que pendant la phase de fonctionnement permanent de la lampe 4.

Le pont inverseur 7 est inséré entre la masse N1 et la sortie de polarité négative N2 du convertisseur CC-CC 2, de sorte que le condensateur d'auto-élévation 13 est chargé par une tension négative. Il en résulte que l'anode de la diode de maintien 14 est reliée au drain N11 du transistor de commutation 15 du convertisseur CC-CC 2.

En variante, l'anode de la diode de maintien 14 est reliée à la masse, ce qui simplifie le pilotage du ballast, mais fait perdre une centaine de volts aux bornes N7,N8 du générateur de tension d'allumage 6.

La suppression de l'enroulement secondaire supplémentaire 600V du transformateur élévateur 16 du convertisseur CC-CC 2 permet d'en réduire le volume et de diminuer le nombre de pattes de connexion du composant.

La réduction du nombre de spires du transformateur 16 permet de diminuer la capacité répartie, et donc d'augmenter la fréquence de fonctionnement du convertisseur CC-CC 2, et par conséquent son rendement.

Les avantages techniques procurés par le ballast selon l'invention sont particulièrement importants lorsque le ballast est utilisé pour alimenter une lampe de projecteur de véhicule, car, traduits en termes de diminution du coût de fabrication, ils confèrent un avantage concurrentiel certain.

Comme il va de soi l'invention ne se limite pas aux seuls modes d'exécution préférentiels décrits ci-dessus. Elle embrasse au contraire toutes les variantes possibles de réalisation.

Notamment les points de masse particuliers, et les polarités des tensions indiqués sur la **Figure 3** ne sont aucunement limitatifs.

Par exemple, le convertisseur continu-continu 2 pourrait aussi bien fournir une haute tension continue positive par rapport à la masse, plutôt que négative. Dans ce cas le montage des transistors 9,10,11,12 du pont inverseur 7 est modifié en conséquence, ou bien les transistors 9,10,11,12 sont remplacés par des types PNP.

Les modes de réalisation particuliers du convertisseur CC-CC 2, du pont inverseur 7, du générateur de tension d'allumage 6, et du circuit auto-élévateur 5 représentés ne sont pas non plus limitatifs : tout autre ensemble de dispositifs produisant le même jeu de tensions nécessaires à l'allumage et au fonctionnement d'une lampe à décharge ne sortirait pas du cadre de la présente invention dans la mesure où ces dispositifs s'intègreraient dans un ballast 1 résultant des revendications ci-après.

## Revendications

1. Ballast (1) de lampe à décharge gazeuse (4) du type de ceux comprenant :
- un convertisseur continu-continu (2) fournissant une tension continue d'un premier niveau prédéterminé V1 à partir d'une source d'alimentation continue (3),
- un convertisseur continu-alternatif comportant un premier, deuxième, troisième et quatrième éléments de commutation (9,10,11,12) montés en pont inverseur (7), alimenté par ledit convertisseur continu-continu (2) entre un premier noeud (N1) commun auxdits premier et deuxième éléments (9,10) et un deuxième noeud (N2) commun auxdits troisième et quatrième éléments (11,12), et fournissant pendant une phase de fonctionnement permanent de ladite lampe (4) une tension alternative entre un troisième noeud (N3) commun auxdits premier et troisième éléments (9,11) et un quatrième noeud (N4) commun auxdits deuxième et quatrième éléments (10,12),
- un générateur de tension d'allumage (6) comportant des bornes de sortie (N5,N6) connectées en série avec ladite lampe (4) auxdits troisième et quatrième noeuds (N3,N4) dudit pont (7), et des bornes d'entrées (N7,N8) soumises pendant l'initialisation de la phase d'allumage de ladite lampe (4) à une différence de tension d'un second niveau prédéterminé V2,
- une unité de commande (8) fournissant des premiers signaux de commande (S1) audit convertisseur continu-continu (2) et des seconds signaux commande (S2) audit convertisseur continu-alternatif en fonction d'une consigne de pilotage (P) dépendant desdites phases,
**caractérisé en ce que** ladite différence de tension entre lesdites bornes d'entrée (N7,N8) dudit générateur de tension d'allumage (6) est générée par un circuit élévateur de tension (5) de type « auto-élévateur » à partir de ladite tension continue dudit convertisseur continu-continu (2) et d'une source de tension auxiliaire d'une valeur prédéterminée V0.

2. Ballast (1) de lampe à décharge gazeuse (4) selon la revendication 1, **caractérisé en ce que** ledit second niveau prédéterminé V2 est égal au double dudit premier niveau prédéterminé V1 augmenté de ladite valeur prédéterminée V0.

3. Ballast (1) de lampe à décharge gazeuse (4) selon la revendication 2, **caractérisé en ce que** ledit circuit élévateur de tension (5) comporte une diode de maintien (14) et un condensateur d'auto-élévation (13) en série, la borne commune (N9) entre ladite diode de maintien (14) et ledit condensateur d'auto-élévation (13) étant reliée électriquement à une première (N7) desdites bornes d'entrée (N7,N8) dudit générateur d'allumage (5), l'autre borne (N10) dudit condensateur d'auto-élévation (13) étant reliée audit quatrième noeud (N4) dudit pont (7), et la cathode ou l'anode de ladite diode de maintien (14) étant reliée à ladite source de tension auxiliaire respectivement selon la polarité positive ou négative de ladite tension continue.

4. Ballast (1) de lampe à décharge gazeuse (4) selon la revendication 3, **caractérisé en ce que** ledit générateur d'allumage (6) comprend un condensateur d'allumage (21) entre lesdites bornes d'entrée (N7,N8), la seconde (N8) desdites bornes d'entrée (N7,N8) dudit générateur d'allumage (6) étant reliée électriquement audit deuxième noeud (N2) dudit pont (7).

5. Ballast (1) de lampe à décharge gazeuse (4) selon la revendication 4, **caractérisé en ce que** ledit générateur d'allumage (6) comprend de plus un éclateur (20) et un bobinage primaire d'un transformateur d'allumage (19) en série entre lesdites bornes d'entrée (N7,N8), un bobinage secondaire dudit transformateur d'allumage (19) étant relié en parallèle auxdites bornes de sortie (N5,N6) dudit générateur d'allumage (6).

6. Ballast (1) de lampe à décharge gazeuse (4) selon l'une quelconque des revendications 3 à 5, **caractérisé en ce que** lesdits éléments de commutation (9,10,11,12) sont des transistors de type IGBT dont les grilles sont reliées à ladite unité de commande (8).

7. Ballast (1) de lampe à décharge gazeuse (4) selon l'une quelconque des revendications 3 à 6, **caractérisé en ce que** ladite tension auxiliaire V0 est nulle, ladite anode ou ladite cathode étant reliée à la masse.

8. Ballast (1) de lampe à décharge gazeuse (4) selon l'une quelconque des revendications 3 à 6, **caractérisé en ce que** ledit convertisseur continu-continu (2) comprend un transformateur élévateur (16) à enroulement secondaire unique dont l'enroulement primaire est connecté en série avec un organe de commutation (15) sur ladite source d'alimentation continue (3), et **en ce que** ladite tension auxiliaire est égale au potentiel du point commun (N11) entre ledit enroulement primaire et ledit organe de commutation (15), ladite anode ou ladite cathode étant reliée audit point commun (N11).

9. Procédé de pilotage d'un ballast (1) de lampe à décharge gazeuse (4) selon l'une quelconque des revendication 3 à 8, **caractérisé en ce que**:
- pendant l'initialisation de ladite phase d'allumage, lesdits seconds signaux de commande (S2) provoquent simultanément l'ouverture desdits premier et deuxième éléments (9,10) et la fermeture desdits troisième et quatrième éléments (11,12) de manière à charger au préalable ledit condensateur d'auto-élévation (13) à une différence de potentiel Vb en ajoutant ladite tension continue dudit premier niveau prédéterminé V1 et ladite tension auxiliaire de ladite valeur prédéterminée V0, puis lesdits seconds signaux de commande (S2) provoquent simultanément l'ouverture desdits premier et quatrième éléments (9,12) et la fermeture desdits deuxième et troisième éléments (10,11) de manière à appliquer auxdites bornes d'entrée (N7,N8) dudit générateur de tension d'allumage (6) la somme de ladite différence de potentiel Vb et de ladite tension continue dudit premier niveau prédéterminé V1;
- pendant ladite phase de fonctionnement permanent, lesdits seconds signaux de commande (S2) provoquent alternativement l'ouverture ou la fermeture simultanée desdits premier et quatrième éléments (9,12) et respectivement la fermeture ou l'ouverture simultanée desdits deuxième et troisième éléments (10,11), de manière à générer entre lesdits troisième et quatrième noeuds (N3,N4) ladite tension alternative.

10. Procédé de pilotage d'un ballast (1) de lampe à décharge gazeuse (4) selon la revendication 8, **caractérisé en ce que** pendant ladite phase d'initialisation, lesdits premiers signaux de commande (S1) provoquent alternativement l'ouverture et la fermeture dudit organe de commutation (15) de manière à générer ladite tension auxiliaire de ladite valeur prédéterminée V0.

11. Véhicule automobile, **caractérisé en ce qu'**il comporte au moins un ballast selon l'une quelconque des revendications 1 à 8.
